# EUROPEAN PATENT APPLICATION

(11) **EP 4 592 451 A1**
(43) Date of publication of application: **30.07.2025**
(21) Application number: 24154321.4
(22) Date of filing: 29.01.2024
(51) Int. Cl.: D06P 1/16, C09D 11/328, C09D 11/38, C09D 11/40, C09D 11/54, D06P 1/48, D06P 1/50, D06P 5/30

(54) **AQUEOUS INK SET COMPOSITION FOR TEXTILE PRINTING**

(71) Applicant: AGFA NV, 2640 Mortsel (BE)
(72) Inventor: BERTELS, Ellen, 2640 Mortsel (BE); CORTES SALAZAR, Fernando, 2640 Mortsel (BE); LINGIER, Sophie, 2640 Mortsel (BE); WYNANTS, Sonny, 2640 Mortsel (BE)
(74) Representative: Lingier, Stefaan Frans L.

(57) **Abstract**

An aqueous ink set for textile printing comprising a first aqueous ink and a second aqueous ink, the first aqueous ink comprises a first disperse dye, a first dispersant and lignin, the second aqueous ink comprises a second disperse dye, a second dispersant and a sugar alcohol selected from the group consisting of threitol, erythritol, arabitol, ribitol, xylitol, lyxitol, sorbitol, mannitol, iditol, gulitol, talitol, galactitol, allitol, altritol, maltitol, isomaltitol, lactitol, turanitol, and combinations thereof. A recording method using the aqueous ink set is also included.

## Description

### Technical Field

The present invention relates to an inkjet ink set comprising aqueous inks having a disperse dye as water-insoluble colouring material, for the printing of synthetic substrates such as textile materials and sheets for transfer printing. The invention includes also a recording method, dyeing method and colouring method by means of ink-jetting using said ink set.

### Background Art

In recent years, the use of inkjet printing has been expanding, and is applied not only to printing machines for office or home use but also to commercial printing, textile printing, or the like.

Ink jet ink containing a disperse dye has already been used for the use in industrial dyeing of hydrophobic fibres such as polyesters and other hydrophobic substrates. The disperse dye penetrates and diffuses into the fibres under high temperature condition, and is fixed by means of hydrogen bond, intermolecular force, etc. between the fibre and the dye.

Printing methods for such inkjet inks include a direct printing method, in which the ink is printed on a recording medium (usually composed of fibres) to be dyed and then the dye is fixed by heat treatment such as calandering or steaming; and include also a thermal transfer printing method in which the dye ink is printed on an intermediate transfer medium (dedicated transfer paper) and then the dye is sublimated and transferred from a side on the intermediate transfer medium to a recording medium to be dyed.

An inkjet ink containing a disperse dye generally has the problem that ink storage stability is low and jetting reliability in an inkjet method is also poor, due to a problem in long-term dispersion stability of the disperse dye.

In EP 3 546 535 A, an aqueous inkjet composition comprising a disperse dye, a non-ionic dispersant and an anionic dispersing agent such as lignin sulfonic acid is disclosed. Improved ink stability is claimed due to the presence of lignin sulfonic acid.

US 2015/337153 A discloses an inkjet ink set for sublimation transfer, including a first ink composition containing a disperse dye and a first dispersant; and a second ink composition containing a disperse dye and a second dispersant, each of the dispersants contain a salt of aromatic sulfonic acid.

US 7234805 B teaches inkjet inks containing a disperse dye, sodium arylsulfonate formaldehyde condensate and a sugar alcohol to effectively prevent nozzle clogging, exhibit good dispersion stability, and achieve a high redispersion property that ensures stable ejection both during long continuous operation and after stopping the operation for a long time.

The compositions of the aqueous inkjet ink containing lignin sulfonic acid or arylsulfonate formaldehyde condensate as anionic dispersing agent in the above mentioned patent applications lead to an improvement of the discharge stability or jetting reliability.

The additional use of an anionic dispersing agent such as lignin sulfonic acid or aromatic sulfonic acid in all inks of an inkjet ink set will have as drawback that the water resistance of the printed images is decreased leading to an unacceptable wet crock fastness level of the printed textile.

CN102304862 discloses a printing process of pure cotton or polyester-cotton denim using an ink comprising Disperse Red 60, Disperse Blue 56 or Disperse Yellow 54, lignin and carboxymethyl cellulose as binder. Due to the high binder content this ink is not suitable for inkjet printing.

Hence, there is still a need for a disperse dye containing aqueous inkjet ink set which shows a reliable jetting behaviour for industrial printing applications on polyester containing textile and showing an acceptable wet crock fastness together with an excellent discharge stability.

### Summary of invention

It is an objective of the invention to provide a solution for the above stated problems. The objective has been achieved by incorporating lignin into at least one of the inks of an aqueous inkjet ink set comprising a disperse dye and a dispersant as defined in claim 1.

According to another aspect, the present invention includes a method for inkjet dyeing of a fabric characterized by fixing a colouring material to the fabric by means of steaming or baking treatment after providing the ink composition according to Claim 1 to hydrophobic fibres of the fabric by means of an ink jetting as defined in Claim 10.

According to another aspect, the present invention includes a method for preparing the ink set of Claim 1 as in Claim 12.

According to another aspect, the present invention includes a polymer containing fabric containing the components of the ink set of Claim 1 as in Claim 13.

Other features, elements, steps, characteristics and advantages of the present invention will become more apparent from the following detailed description of preferred embodiments of the present invention. Specific embodiments of the invention are also defined in the dependent claims.

### Description of embodiments

### A. Aqueous inkjet ink set

The aqueous ink set for textile printing according to the invention comprises a first ink and a second ink, the first ink comprises a first disperse dye, a first dispersant and lignin, the second ink comprises a second disperse dye, a second dispersant and a sugar alcohol selected from the group consisting of threitol, erythritol, arabitol, ribitol, xylitol, lyxitol, sorbitol, mannitol, iditol, gulitol, talitol, galactitol, allitol, altritol, maltitol, isomaltitol, lactitol, turanitol and a combination thereof.

### A.1. First ink

### A.1.1. Lignin

Lignin is a highly heterogeneous polymer derived from a handful of precursor lignols that may crosslink in diverse ways.

The lignols that crosslink are of three main types, all derived from phenylpropane: coniferyl alcohol (4-hydroxy-3-methoxyphenylpropane) (G, its radical is sometimes called guaiacyl), sinapyl alcohol (3,5-dimethoxy-4-hydroxyphenylpropane) (S, its radical is sometimes called syringyl), and paracoumaryl alcohol (4-hydroxyphenylpropane) (H, its radical is sometimes called 4-hydroxyphenyl).

The amount of lignin in the firsts aqueous ink of the ink set according to the invention is from 0.1 wt.% to 5 wt.%, more preferably from 0.5 wt.% to 3 wt.% with respect to the total weight of the ink. If the amount of lignin is below 0.5 wt.%, the lowering of the feathering gets strongly reduced. If the amount of lignin gets below 0.1 wt.%, the effect on image quality such as feathering is minimal. An amount above 3 wt.% of lignin reduces too much the hue of coloured inks such as cyan and yellow due to colour contamination from the lignin itself.

Lignin is hydrophobic and shows a low solubility in water. A preferred way to introduce lignin in the first aqueous ink from the ink set of the invention, is to add lignin during the preparation of the dispersion of the disperse dye. In order to facilitate the introduction of lignin in the disperse dye dispersion, some extra dispersant can be added before or during the preparation of the dispersion. Preferred dispersants are non-ionic dispersants, and more preferred dispersants are copolymers of an acrylate and an alkylene oxide.

Lignin as such may also act as a dispersant. An additional dispersant is then not required during the preparation of the disperse dye dispersion.

Another suitable way of incorporating lignin into the first aqueous ink of the ink set of the invention is as a solution of the lignin in an organic solvent or in aqueous alkaline media.

### A.1.2. Dispersion of the first disperse dye

The colorant of the first aqueous ink of the ink set of the present invention is a first disperse dye which has to be dispersed in the aqueous vehicle of the ink. This dispersion comprises a vehicle which is preferably water, at least one disperse dye, a dispersant and preferably lignin.

### A. 1.2.1. Preparation of the disperse dye dispersion

The method for dispersing preparation comprises first a step of making a pre-mix of the vehicle and a first dispersant. After the formation of the pre-mix, a pre-dispersion is made by mixing the disperse dye with the pre-mix. The lignin can be added in the pre-mix or in the pre-dispersion.

In another embodiment of the invention, the pre-dispersion can be directly made by mixing the vehicle with the first disperse dye, the first dispersant and the lignin in one step.

The lignin is a solid and the addition is preferably done slowly to avoid clumping during the preparation of the pre-dispersion.

Subsequently, high shear forces or milling is applied onto the obtained pre-dispersion such as to obtain a stable dispersion of the disperse dyes.

The dispersion method for obtaining the stable dispersion of the first disperse dye, can be arbitrarily selected as long as this is a method for braking agglomerates of particles and evenly dispersing the disperse dyes in the vehicle.

Equipment suitable for dispersing the first disperse dyes include a pressure kneader, an open kneader, a planetary mixer, a dissolver, and a Dalton Universal Mixer. Other suitable milling and dispersion equipment include a ball mill, a pearl mill, a colloid mill, a high-speed disperser, double rollers, a bead mill, a paint conditioner, and triple rollers. The dispersion may also be prepared using ultrasonic energy.

Many different types of materials may be used as milling media, such as glasses, ceramics, metals, and plastics. In a preferred embodiment, the grinding media can comprise particles, preferably substantially spherical in shape, e.g. beads consisting essentially of a polymeric resin or yttrium stabilized zirconium oxide beads.

In the process of mixing, milling and dispersion, each process is preferably performed with cooling to prevent build-up of heat.

The addition of the lignin can take place before, during or after the process of applying the high shear forces or the milling.

The ratio of the amount of the first dispersant with respect to the amount of the first disperse dye is preferably 12 to 32, more preferably 12 to 25, most preferably 10 to 20.

With respect to disperse dye dispersions without lignin, the amount of dispersant is usually higher as a part of the dispersant can be required for dispersing the lignin.

Without being bound by a theory, it is thought that lignin works as a kind of synergist together with the first dispersant which results in stable dispersions leading to stable and high performing inks. It is further thought that the Ostwald ripening of the first disperse dye is decreased. The alleged functioning as a synergist of lignin further results in an increased milling efficiency.

The concentration of the first disperse dye with respect to the total weight of the dispersion of the present invention is 10 to 60 wt.%, preferably 15 to 55 wt.%, and more preferably 20 to 50 wt.%.

The particle size of the disperse dye can be controlled by the treatment time of the high shear application or of the milling. More particularly, by increasing the treatment time, the first disperse dye particles can be made smaller and the amount of particle oversizers can be reduced.

Preferably the first disperse dye particles of the present invention have an average particle diameter of 1 µm or less, preferably 500 nm or less, more preferably 250 nm or less. If the average particle size is higher than these values, jetting reliability problems will occur due to clogging of inkjet head nozzles. At the same time the amount of particle oversizers having a particle size more than 1.125 µm should be lower than 10.10⁻⁶ to assure a reliable jetting of the ink wherein the first disperse dye dispersion is included.

By means of the production method described above, a stable first disperse dye dispersion is obtained which can be used in the preparation of the first disperse dye inkjet ink of the ink set according to the invention.

### A.1.2.2. First disperse dye

The first ink composition of the ink set according to the invention includes a first disperse dye.

Suitable first disperse dyes include any dye identified as a disperse dye by Colour Index International in the Colour Index, www.colour-index.com, which is incorporated herein by reference in its entirety. Examples of disperse dyes are given in the Colour Index, 3' Edition, pages 2479 to 2742, which is incorporated herein by reference in its entirety. Each of the disperse dyes described therein is also incorporated herein by reference.

Suitable disperse dyes that may be used in the first inks described herein include all dyestuffs that are considered disperse.

Examples of the first disperse dyes used in the present invention include an azo dye, an anthraquinone dye, a quinophthalone dye, a styryl dye, an oxazine dye, a xanthene dye, a methine dye, and an azomethine dye. Of such dyes, examples of a yellow disperse dye include "C.I.Disperse Yellow 3, 4, 5, 7, 9,13, 23, 24, 30, 33, 34, 42, 44, 49, 50, 51, 54, 56, 58, 60, 63, 64, 65, 66, 68, 71, 74, 76, 79, 82, 83, 85, 86, 88, 90, 91, 93, 98, 99, 100, 104, 108, 114, 116, 118, 119, 122, 124, 126, 135, 140, 141, 149, 160, 162, 163, 164, 165, 179, 180, 182, 183, 184, 186, 192, 198, 199, 201, 202, 204, 210, 211, 215, 216, 218, 224, 227, 231and 232. Examples of an orange disperse dye include "C. I. Disperse Orange 1, 3, 5, 7,11, 13, 17, 20, 21, 25, 29, 30, 31, 32, 33, 37, 38, 42, 43, 44, 45, 46, 47, 48, 49, 50, 53, 54, 55, 56, 57, 58, 59, 61, 62, 66, 71, 73, 76, 78, 80, 89, 90, 91, 93, 96, 97, 119, 127, 130, 139, 142 and 155. Examples of a red disperse dye include "C.I.Disperse Red 1, 4, 5, 7, 11, 12, 13, 15, 17, 27, 43, 44, 50, 52, 53, 54, 55, 56, 58, 59, 60, 65, 67.1, 72, 73, 74, 75, 76, 78, 81, 82, 86, 88, 90, 91, 92, 93, 96, 103, 105, 106, 107, 108, 110, 111, 113, 117, 118, 121, 122, 126, 127, 128, 131, 132, 134, 135, 137, 143, 145, 146, 151, 152, 153, 154, 157, 159, 164, 167, 169, 177, 179, 181, 183, 184, 185, 188, 189, 190, 191, 192, 200, 201, 202, 203, 205, 206, 207, 210, 221, 224, 225, 227, 229, 239, 240, 257, 258, 277, 278, 279, 281, 288, 298, 302, 303, 310, 311,312, 320, 324, 328 and 343. Examples of a blue disperse dye include C.I. Disperse Blue 3, 7, 9, 14, 16,19,20, 26, 27, 35, 43, 44, 54, 55, 56, 58, 60, 62, 64, 71, 72, 77, 73, 75, 79, 81, 82, 83, 87, 91, 93, 94, 95, 96, 102, 106, 108, 112, 113, 115, 118, 120,122, 125, 128, 130, 139, 141, 142, 143, 146, 148, 149, 153,154, 158, 165, 167, 171, 173, 174, 176, 181, 183, 185, 186, 187,189, 197, 198, 200, 201, 205, 207, 211, 214, 224, 225, 257, 259, 267, 268, 270, 281, 284, 285, 287, 288, 291, 293, 295, 297, 301, 315, 330, 333, 354, 359, 360, 366 and 367. Most preferably, Disperse Blue 359 as disperse dye for the aqueous inkjet ink of the invention, is used. Examples of other disperse dye include "C.I. Disperse Violet 1, 4, 8, 23, 26, 27, 28, 31,33, 35, 36, 38, 40, 43, 46, 48, 50, 51, 52, 56, 57, 59, 61, 63, 69, 77 and 93. Examples of a black disperse dye, which are not particularly limited, include C.I. Disperse Black 1, 3, 10, and 24. Examples of types of dyes other than the above-described dyes include "C.I. Solvent Yellow 160" and 163, "C.I.Vat Red 41" and "Solvent Green 3".

In a preferred embodiment of the invention, the first ink of the ink set is a black ink, more preferably, the first disperse dye is then a mixture of DY54 and DB360, most preferably also further containing DR60, DO27 or DO25.

Generally, the total amount of first disperse dye in the first ink is of 0.2 to 12 wt. %, and more preferably 0.5 to 10 wt. %, with respect to the total mass of the ink. If the first disperse dye concentration is with these limits a dispersion stability can be maintained which is useful in an industrial environment for preparing inks and a high colour density of the printed images can be achieved.

### A.1.2.3. Dispersant

The first inkjet ink composition of the ink set according to the invention includes a first dispersant. The dispersion stability of the disperse dye in the inkjet ink is improved, and the storage stability of the inkjet ink composition for sublimation and the discharging stability of the ink for sublimation over a long period of time are improved. Examples of the first dispersant, which is not particularly limited, include an anionic dispersant, a non-ionic dispersant, and a polymer dispersant. Typical anionic and non-ionic dispersants are surfactants.

Preferably the first dispersant is a polymeric dispersant. Examples of useful polymer dispersants, which are not particularly limited, include polyacrylic acid partial alkyl ester, polyalkylene polyamine, polyacrylate, a styrene acrylic acid copolymer, a co-polyacrylate-alkylene oxide, a polyacrylate having a backbone with alkylene oxide groups as side chains and a vinyl naphthalene-maleic acid copolymer.

Suitable examples of the anionic dispersant as a first dispersant, include a salt of aromatic sulfonic acid (for example, a sodium salt or an ammonium salt, the same shall apply hereinafter), a salt of formalin condensate and β -naphthalene sulfonic acid, a salt of formalin condensate, and alkyl naphthalene sulfonic acid, a salt of formalin condensate and creosote oil sulfonic acid, or a formalin condensate.

Examples of the salt of aromatic sulfonic acid, which are not particularly limited, include creosote oil sulfonic acid, cresol sulfonic acid, phenol sulfonic acid, β-naphthol sulfonic acid, alkyl naphthalene sulfonic acids such as methyl naphthalene sulfonic acid and butyl naphthalene sulfonic acid, a mixture of β-naphthalene sulfonic acid and β-naphthol sulfonic acid, a mixture of cresol sulfonic acid and 2-naphthol-6-sulfonic acid, and lignin sulfonic acid.

Suitable examples of a non-ionic dispersant as a first dispersant include an ethylene oxide adduct of phytosterol and an ethylene oxide adduct of cholestanol.

The content of the first dispersant is preferably 1 to 200 wt.%, more preferably 10 to 150 wt.%, most preferably 30 to 60 wt.% with respect to the total amount of the first disperse dye stuff included in the first ink jet ink composition from the ink set of the invention. When the content of the first dispersant is in the above-described range, there is a tendency that the dispersion stability of the first disperse dye is further improved.

### A.1.3. Water-miscible solvent

The first aqueous inkjet ink of the ink set according to the invention may contain a water-miscible organic solvent. In the present invention this can include glycerin, diglycerin, polyglycerin, ethylene glycol, diethylene glycol, triethylene glycol, polyethylene glycol, propylene glycol, 1,3-propanediol, 1,2-propaandiol, dipropylene glycol, tripropylene glycol, polypropylene glycol, 2-pyrrolidone, N-methylpyrrolidone, dimethyl sulfoxide, and sulfolane.

From the water-miscible organic solvents, it is preferable to use glycerin, diethylene glycol, triethylene glycol, polyethylene glycol (average molecular weight of 200 to 600), dipropylene glycol, and tripropylene glycol, and more preferably glycerin, diethylene glycol, and dipropylene glycol, from the viewpoint of moisturizing properties. Of these solvents, glycerin is particularly preferable to avoid clogging of the nozzles and drying at the nozzle plate of the inkjet head.

Other examples include propylene glycol, dipropylene glycol, 1,2-butanediol, 1,3-butanediol, 1,4-butanediol, 2,3-butanediol, 3-methyl-1, 3-butanediol, 1,2-pentanediol, 1,5-pentanediol, 2-methyl-2, 4-pentanediol, 3-methyl-1, 5-pentanediol, 1,2-hexanediol and 1,6-hexanediol.

Examples of the glycol ether include monoalkyl ethers of glycol selected from ethylene glycol, diethylene glycol, triethylene glycol, propylene glycol, dipropylene glycol, and tripropylene glycol. More specifically, triethylene glycol monomethyl ether, triethylene glycol monobutyl ether, and dipropylene glycol monopropyl ether can be preferably exemplified. These solvents may be used alone or in combination of two or more.

These water-miscible organic solvents preferably are contained in a total amount of 1 to 50 wt.%, more preferably 30 to 45 wt.%, and particularly preferably 20 to 40 wt.%, with respect to the total mass of the ink, from the viewpoint of the viscosity adjustment of the ink and the prevention of clogging of nozzles of the inkjet print head by the moisturizing effect.

### A.1.4. Surfactant

To adjust the surface tension of the first ink of the ink set of the invention, a surfactant can be used, and examples thereof include anionic surfactants, amphoteric surfactants, cationic surfactants, and non-ionic surfactants.

Examples of the anionic surfactant include alkyl sulfocarboxylate, α-olefin sulfonate, polyoxyethylene alkyl ether acetate, N-acylamino acid and salt thereof, N-acylmethyl taurine salt, alkyl sulfate polyoxy alkyl ether sulfate, alkyl sulfate polyoxyethylene alkyl ether phosphate, rosin acid soap, sulfate esters of castor oil, lauryl alcohol sulfate ester, alkyl phenol type phosphate ester, alkyl-type phosphate ester, alkyl aryl sulfonate, diethyl sulfosuccinate, diethyl hexyl sulfosuccinate, and dioctyl sulfosuccinate.

Examples of the amphoteric surfactant include lauryl dimethylaminoacetic acid betaine, 2-alkyl-N-carboxymethyl-N-hydroxyethyl imidazolinium betaine, coconut oil fatty acid amide propyldimethylaminoacetic acid betaine, polyoctylpolyaminoethylglycine, and other imidazoline derivatives thereof.

Examples of the cationic surfactant include 2-vinylpyridine derivatives and poly 4-vinylpyridine derivatives. Further examples of cationic surfactants are quaternary ammonium salts of long chain aliphatic tertiary amines such as cetyl trimethyl ammonium bromide, cetyl dimethyl benzyl ammonium chloride and hydroxyethyl dimethyl dodecyl ammonium chloride and quaternary salts of nitrogen containing heteroaromatic rings such as hexadecyl pyridinium bromide and quaternized imidazoles and benzimidazoles. Other examples are protonated long chain aliphatic amines such as the hydrochloric acid salt of dimethyl hexadaceyl amine and the toluene sulfonic acid salt of diethyl dodecyl amine.

Examples of the nonionic surfactant include ether based surfactants such as polyoxyethylene nonylphenyl ether, polyoxyethylene octyl phenyl ether, polyoxyethylene dodecyl phenyl ether, polyoxyethylene oleyl ether, polyoxyethylene lauryl ether, and polyoxyethylene alkyl ether; ester-based surfactants such as polyoxyethylene oleic acid ester, polyoxyethylene distearate, sorbitan laurate, sorbitan monostearate, sorbitan monooleate, sorbitan sesquioleate, polyoxyethylene monooleate, and polyoxyethylene stearate.

Other preferable non-ionic surfactants are acetylene glycol (alcohol)-based surfactants such as 2,4,7,9-tetramethy1-5-decyne-4,7-diol, 3,6-dimethyl-4-octyne-3,6-diol, and 3,5-dimethyl-1-hexyne-3-ol.

### A. 2. The second aqueous ink

The second ink of the ink set according to the invention comprises a second disperse dye, a second dispersant and a sugar alcohol.

### A.2.1. Sugar alcohol

The sugar alcohol used in the present invention is preferably sugar alcohol derived from monosaccharide or sugar alcohol derived from disaccharide. Examples of the sugar alcohol derived from monosaccharide include threitol, erythritol, arabitol, ribitol, xylitol, lyxitol, sorbitol, mannitol, iditol, gulitol, talitol, galactitol, allitol, and altritol. Examples of the sugar alcohol derived from disaccharide include maltitol, isomaltitol, lactitol, and turanitol. The present invention requires sugar alcohol containing not less than four OH groups. The sugar alcohol containing less than four OH groups, e.g., glycerin is less preferable because it is evaporated by heating in sublimation transfer step of the recording process. Among the above examples, D-sorbitol, xylitol, and maltitol are preferred.

The sugar alcohols can be used individually or as a mixture of two or more types of sugar alcohol. To adjust the ink viscosity, retain ink stability and to prevent clogging by utilizing a moisture retention effect, the amount of sugar alcohol used in the present invention is preferably 0.5 to 50 wt.%, more preferably 2 to 40 wt.%, and even more preferably 5 to 25 wt.% with respect to the total weight of ink.

### A.2.2. Dispersion of the second disperse dye

The dispersion and the making of the second disperse dye to be incorporated into the second ink of the ink set according to the invention is similar to the dispersion of § A.1.2.

In a preferred embodiment of the invention, the second dispersant is a salt of aromatic sulfonic acid (for example, a sodium salt or an ammonium salt, the same shall apply hereinafter), a salt of formalin condensate and β-naphthalene sulfonic acid, a salt of formalin condensate, and alkyl naphthalene sulfonic acid, a salt of formalin condensate and creosote oil sulfonic acid, or a formalin condensate.

Suitable examples of the salt of aromatic sulfonic acid, include creosote oil sulfonic acid, cresol sulfonic acid, phenol sulfonic acid, β-naphthol sulfonic acid, alkyl naphthalene sulfonic acids such as methyl naphthalene sulfonic acid and butyl naphthalene sulfonic acid, a mixture of β-naphthalene sulfonic acid and β-naphthol sulfonic acid, a mixture of cresol sulfonic acid and 2-naphthol-6-sulfonic acid, and lignin sulfonic acid.

In a more preferred embodiment of the invention, the second disperse dye is a cyan disperse dye and the second dispersant is a lignin sulfonic acid or salt thereof, more preferably the cyan disperse dye is selected from the group consisting of DB359 and DB60.

### A.2.3. Water-miscible solvent

The second aqueous inkjet ink of the ink set according to the invention may contain a water-miscible organic solvent as described in § A.1.3.

In a preferred embodiment of the invention, the water-miscible organic solvent is glycerin and 1,3-propaan diol or a combination thereof.

### A.2.4. Surfactant

The second aqueous inkjet ink of the ink set according to the invention may contain a surfactant as described in § A.1.4.

In a preferred embodiment of the invention, the surfactant is an acetylene glycol (alcohol)-based surfactant such as 2,4,7,9-tetramethy1-5-decyne-4,7-diol, 3,6-dimethyl-4-octyne-3,6-diol, and 3,5-dimethyl-1-hexyne-3-ol.

### B. Inkjet recording method

A method of inkjet recording, more particularly of inkjet textile printing using the ink set of the present invention as described above can be performed as follows. First, the inks of the ink set for inkjet textile printing is set in inkjet print head such as a piezo-type, thermal-type or continuous type and can then be ejected on a fabric comprising hydrophobic fibres such as polyester fibres. Onto the hydrophobic fibres, a pre-treatment may have been applied to prevent blur.

After the jetting step, the fabric is optionally heated to dry the image, followed by heating the printed fabric at a temperature from 150°C to 220° C for 0.5 to 15 minutes under pressure. Preferably, the heating time is 40 to 60 seconds. Several means of heating can be used, but preferably calandering and steam heating is used. The hydrophobic fibres, such as polyester fibres are dyed with the disperse dye of the ink. Thereafter the non-fixed disperse dyes, the additives such as the dispersants, the pre-treatment agent, the sugar alcohol may be removed by washing, reduction cleaning or reduction clearing and washing with water. After drying the fabric, a dyed product on which an image is printed is provided. The dyed product may contain the dispersant and the lignin present in the ink.

The inkjet recording method according to the invention may also comprise a transferring step to a fabric or an object coated with synthetic polymers suitable to accepts disperse dyes, using an intermediate transfer medium. As the intermediate transfer medium, which is not particularly limited, for example, paper such as plain paper or a recording medium provided with an ink absorbing layer based on porosity or swellability (which is referred to as paper for exclusive use for inkjet or coated paper) can be used. Among these, paper provided with an ink absorbing layer which is formed of inorganic fine particles such as silica or a swellable layer is preferable. In the process of drying the inkjet ink compositions for sublimation transfer attached to the intermediate transfer medium, it is possible to obtain the intermediate transfer medium in which bleeding is suppressed, and in the following transferring step, there is a tendency that the sublimation of the disperse dyes proceeds more smoothly.

The transferring step is a step of transferring the disperse dyes included in the ink jet ink compositions of the ink set according to the invention to a fabric or an object coated with synthetic polymers suitable to accepts disperse dyes, by heating in a state in which a surface of the intermediate transfer medium on which the inkjet ink according to the invention has been jetted and a surface of the fabric or an object coated with e.g. PES face each other.

The heating temperature in the transferring step, which is not particularly limited, is preferably 160°C to 220°C, and more preferably 170°C to 200° C. When the heating temperature is in the above-described range, the sublimation of the dyes is sufficient to achieve a high colour density while excessive shrinking or deformation of the fabric is avoided.

The heating time in the step, which also depends on the heating temperature, is 30 seconds to 150 seconds, and more preferably 45 seconds to 90 seconds. When the heating time is in the above-described range, there is a tendency that the energy required for transferring can be smaller and the productivity of the recorded matter is improved.

### C. EXAMPLES

### C.1. Materials

All materials used in the following examples were readily available from standard sources such as Merck and ACROS (Belgium) unless otherwise specified. The water used was deionized water.
- **DB 360:** Disperse blue 360 is a disperse dye bought under the tradename Riaplas Blue DB TP, supplied by Rialco
- **DO 25:** Disperse orange 25 is a disperse dye with tradename Riaplas orange 2 RL TP, supplied by Rialco
- **DY 54:** Disperse yellow 54 is a disperse dye bought under the tradename Riaplas Yellow 3 GL TP, supplied by Rialco
- **DR 60:** Disperse red 60 is a disperse dye with tradename Riaplas Red 2 BL TP, supplied by Rialco
- **DB359:** Disperse blue 359 is a disperse dye bought under the tradename Riaplas blue 3GL-TPM, supplied by Rialco
- **Disperbyk 2010** is a 40% solution of a copolymer of an acrylate and an alkylene oxide, provided by BYK Chemie
- **Edaplan ^{™} 482** is a polymeric dispersant from MUNZING
- **Dispex^{™} Ultra PX 4585** is a high-molecular-weight dispersing agent available as (50% aqueous solution) from BASF
- **Indulin AT** is a purified form of kraft pine lignin supplied by Ingevity UK LTD
- **VANI** is Vanisperse CB, a lignosulfonate supplied by Borregaard
- **BYKJET 9170** is a dispersant, provided by BYK Chemie
- **GLY** is glycerin
- **PD** is 1,3 propanediol, supplied by IMCD
- **SURF1** is Surfynol 104H produced by Evonik
- **SURF2** is Byk 333 manufactured by Byk
- **SURF3** is Surfynol 104PG50, produced by Evonik
- **XYL S** is an aqueous solution of 60 wt.% of Xylisorb 700, a xylitol supplied by Ravago Chemicals,
- **SORB S** is an aqueous solution of 70 wt.% of Neosorb NC, a sorbitol supplied by Roquette Freres
- **Proxel K** is a 5% solution of BIT BIOCIDE 9.25% IN H₂O/KOH
- **DI water** is deionised water

### C.2. Measuring methods

### C.2.1. Average Particle Size of the disperse dye dispersion

The average particle size of the disperse dye particles was measured using a Zetasizer^{™} Nano-S (Malvern Instruments, Goffin Meyvis) based upon the principle of dynamic light scattering. For reliable ink jetting characteristics (jetting quality and print quality), the average particle size of the dispersed particles in the ink is preferably below 250 nm.

### C.2.2. Viscosity of the dispersion

The viscosity of the disperse dye dispersion was evaluated with an Anton Paar MCR302 Rheometer in a cone plate set-up. The viscosity is measured at a shear rate of 10 s⁻¹ at a temperature of 25°C.

### C.2.3. Measurement of amount of particle oversizers

The amount of particle oversizers of the disperse dye dispersions was evaluated with a Mastersizer III from Malvern Pananalytical. A measuring tube of 50 µm (range 1-30 µm) was used and the electrolyte was a 0.1 M NaCl solution. A sample (1 or 2 mL) of the disperse dye dispersion was diluted to 200 mL, and 0.5 mL of this dilution was then measured.

An amount of particles/mL sample having a particle size less than 1.125 µm below 10×10⁻⁶ is considered as a low amount of particle oversizers. An amount of particles/mL sample having a particle size less than 1.125 µm between 10×10⁻⁶ and 50×10⁻⁶ is considered as a medium amount of particle oversizers. If the number of particles/mL sample having a particle size less than 1.125 µm is larger than 50×10⁻⁶, it is considered a high amount of particle oversizers are present. It is then expected that jetting reliability problems may occur if this dispersion in used in an inkjet ink formulation of the inks from the ink set of the invention.

### C.2.4. Coating of inks from comparative and inventive ink sets

A bar coating of the inks was made using an Elcometer 4340 using a spiral bar of 4 µm on a polyester backlit substrate and sublimated using a calander (with belt and heated oil rotating drum) at 190°C with a contact time of 54 seconds.

### C.2.5. L value of the inks from comparative and inventive ink sets

The inks were diluted 10 times with deionised water and coated according to C.2.4. The CIE L* of the ink coating was measured using a Gretag SPM50 with D65 illumination under an observer angle of 10°. Evaluation was done according to Table 1.a for black ink and according to Table 1.b for cyan ink.

**Table 1.a**

| **L value** | **Score** |
|---|---|
| < 26 | A |
| 26-28 | B |
| > 28 | C |

**Table 1.b**

| **L value** | **Score** |
|---|---|
| 56 ≤ L <57 | A |
| 55 ≤ L <56 | B |
| 54 ≤ L <55 | C |

### C.2.6. Wet crock fastness

The ink was coated undiluted according to C.2.4, after which a wet crock fastness test is done according to ISO105-X12 with a Crockmeter SDL ATLAS M238AA. The coloration of the white rubbing cloth was given a ΔE according to the Cielab colour space and scored according to Table 2.

**Table 2**

| **ΔE** | **Score** |
|---|---|
| <15 | A |
| 15-20 | B |
| 21-30 | C |

### C.2.6. Feathering

The inks were coated undiluted according to C.2.4. on the rough side of Be.tex display 210 FR supplied by Berger, Germany (instead of backlit). Feathering was evaluated according to Table 3.

**Table 3**

| **Observation** | **Score** |
|---|---|
| No/slight feathering | A |
| Intermediate feathering | B |
| Severe feathering | C |

### C.2.7. Open head time

Inks were filtered over a 1 µm filter, degassed and jetted using a Kyocera KJ4B-300 print head at 32 °C with a 2 dpd waveform using an Image Xpert drop watcher setup. The reference voltage of the head was used. After start up, jetting was paused and the set up was left for x minutes. After x minutes, jetting was restarted and 1328 nozzles were inspected after this restart. Evaluation was done based on the percentage of nozzles that showed aberrant jetting behaviour after x minutes of pausing. Evaluation criteria are shown in Table 4.

**Table 4**

| **Observation after 5 minutes of jetting** | **Score** |
|---|---|
| < 10% of missing nozzles + side shooters after x= 20' minutes pause | A |
| < 10% of missing nozzles + side shooters after x= 10' minutes pause | B |
| ≥ 10% of missing nozzles + side shooters after x=10' minutes pause | C |

### C.2.8. Storage stability of ink

To evaluate the storage stability of inks, the average particle size of the ink was firstly measured with a Nicomp 380 from Particle Size solutions, using dynamic light scattering by photon correlation spectroscopy at a wavelength of 633 nm with a 4 mW HeNe laser on a diluted sample of the ink. Samples were measured fresh as well as after ageing 2 weeks in an oven at 60°C. The relative change in particle size (PS) was calculated as follows: [(PS (2 weeks 60°C) - PS (fresh)) / PS (fresh)] and scored according to Table 5.

**Table 5.**

| Relative change of PS (%) | Score |
|---|---|
| < 10% | A |
| 10-20% | B |
| > 20% | C |

### C.2.9. Viscosity of the ink

The viscosity of the inks was measured at 32°C and at a shear rate of 1000 s⁻¹ using a Rotovisco RV1 viscometer from HAAKE. To fit the targeted printhead, a visco rating of A (See Table 6) for the ink is required.

**Table 6.**

| **Viscosity (in mPa.s)** | **Score** |
|---|---|
| 4-5 | A |
| < 4 or >6 | B |

### C.3. Preparation of disperse dye dispersions

In all below dispersion preparations, quantities of compounds are given in wt.% with respect to the total weight of the dispersion.

### Preparation of the comparative black disperse dye dispersion DISP-COMP-1

49.5 wt.% of DI, 30 wt.% of Disperbyk 2010 and 0.5 wt.% of Proxel K were premixed in a vessel using a mechanical stirrer. One by one, the following products were sprinkled in the premix using the following order of addition. First, 8 wt.% of DB 360 was added, followed by, 8 wt.% of DO 25, 2 wt.% of DY54 and 2 wt.% of DR 60. The obtained pre-dispersion was mixed for 30 minutes.

A DynoMill-RL mill was filled for 42% with 0.4 mm yttrium stabilized zirconia beads ("high wear resistant zirconia grinding media" from TOSOH Co.). The mill was pre-washed with DI. The pre-dispersion was pumped into the bead mill and the milling was started in re-circulation mode at a rotation speed of 11.8 m/s. After 25 min residence time, the mill was emptied by pumping the obtained dispersion into a vessel.

The black disperse dye dispersion contains particles with an average particle size of 132 nm and a viscosity of 22 mPa.s.

### Preparation of the comparative black disperse dye dispersion DISP-COMP-2

49.5 wt.% of DI, 30 wt.% of Disperbyk 2010 and 0.5 wt.% of Proxel K were premixed in a vessel using a mechanical stirrer. One by one, the following products were sprinkled in the premix using the following order of addition. First, 12.64 wt.% of DB 360 was added, followed by, 12.64 wt.% of DO 25, 3.23 wt.% of DY54 and 3.49 wt.% of DR 60. The obtained pre-dispersion was mixed for 30 minutes.

A DynoMill-RL mill was filled for 42% with 0.4 mm yttrium stabilized zirconia beads ("high wear resistant zirconia grinding media" from TOSOH Co.). The mill was pre-washed with DI. The pre-dispersion was pumped into the bead mill and the milling was started in re-circulation mode at a rotation speed of 11.8 m/s. After 25 min residence time, the mill was emptied by pumping the obtained dispersion into a vessel.

The black disperse dye dispersion contains particles with an average particle size of 124 nm and a viscosity of 189 mPa.s.

### Preparation of the inventive black disperse dye dispersion DISP-INV-1

44.5 wt.% of DI, 30 wt.% of Disperbyk 2010 and 0.5 wt.% of Proxel K were premixed in a vessel using a mechanical stirrer. One by one, the following products were sprinkled in the premix using the following order of addition. First, 5 wt.% of Indulin AT 5 was added, followed by 8 wt.% of DB 360, 8 wt.% of DO 25, 2 wt.% of DY54 and 2 wt.% of DR 60. The obtained pre-dispersion was mixed for 30 minutes.

A DynoMill-RL mill was filled for 42% with 0.4 mm yttrium stabilized zirconia beads ("high wear resistant zirconia grinding media" from TOSOH Co.). The mill was pre-washed with DI. The pre-dispersion was pumped into the bead mill and the milling was started in re-circulation mode at a rotation speed of 11.8 m/s.

After 25 min residence time, the mill was emptied by pumping the obtained dispersion in a vessel.

The black disperse dye dispersion with lignin contains particles with an average particle size of 154 nm and a viscosity of 213 mPa.s.

### Preparation of the inventive black disperse dye dispersion DISP-INV-2 to DISP-INV-4

62.98 wt.% of DI, 12 wt.% of a dispersant and 0.02 wt.% of the Proxel K were premixed in a vessel using a mechanical stirrer. One by one, the following products were sprinkled in the premix using the following order of addition. First, 5 wt.% of Indulin AT 5 was added, followed by 8 wt.% of DB 360, 8 wt.% of DO 25, 2 wt.% of DY54 and 2 wt.% of DR 60. The obtained pre-dispersion was mixed for 30 minutes.

The vessel was loaded with 160 g of 1 mm yttrium stabilized zirconia beads ("high wear resistant zirconia grinding media" from TOSOH Co.). The vessels were placed on a roller bench for 7 days after which the liquid was separated from the beads.

The properties of DISP-INV-2, DISP-INV-3 and DISP-INV-4 are listed in Table 7.

**Table 7**

| Dispersion | Dispersant | Particle size (nm) | Viscosity (mPa.s) | Viscosity profile |
|---|---|---|---|---|
| DISP-INV-2 | Disperbyk 2010 | 134 | 34 | Newtonian behaviour |
| DISP-INV-3 | Edaplan 482 | 123 | 36 | Newtonian behaviour |
| DISP-INV-4 | Dispex ultra PX4585 | 128 | 35 | Newtonian behaviour |

From Table 7 it can be observed that the particle size of the particles in the dispersions is small, that the viscosity profile showed to be Newtonian (viscosity is independent from the shear rate) and that the viscosity values are low. From these results it can be concluded that stable dispersions can be obtained by combining different dispersants with lignin in order to make a black disperse dye dispersion.

### Preparation of the comparative blue disperse dye dispersion DISP-COMP-3

65.78 wt.% of DI, 13.33 wt.% of Bykjet 9170 and 0.02 wt.% of Proxel K with respect to the total weight of the dispersion, were premixed in a vessel using a mechanical stirrer. First, 20 wt.% of DB359 was sprinkeled in the solution, after which the pH was increased to a value of 8.5-9 by adding triethanolamine. The obtained pre-dispersion was mixed for 30 minutes.

An ECM Multilab mill was filled for 42% with 0.4 mm yttrium stabilized zirconia beads ("high wear resistant zirconia grinding media" from TOSOH Co.). The mill was rinsed with DI after which the pre-dispersion was pumped into the mill. Milling was started in re-circulation mode at a rotation speed of 13 m/s, with a flow of 0.2 L/min. Samples of the dispersion were analysed every 2 minutes of residence time to determine the required milling time. After 30 min of residence time, the particle size showed to be low enough for ink jetting purposes (see Table 8). However, it was decided to finish the milling after 70 minutes of milling time to decrease the population of oversizers to a low level such as to guarantee no jetting problems.

**Table 8**

| Residence time (min) | Particle size (nm) | Level of particle oversizers |
|---|---|---|
| 10 | 277 | High |
| 30 | 171 | High |
| 50 | 163 | Medium |
| 70 | 151 | Low |

A milling time of 70 minutes is considered as rather long in a production environment. The mill was emptied by pumping the obtained dispersion in a vessel.

### Preparation of the inventive blue disperse dye dispersion DISP-INV-5

60.78 wt.% of DI, 13.33 wt.% of Bykjet 9170 and 0.02 wt.% of Proxel K with respect to the total weight of the dispersion, were premixed in a vessel using a mechanical stirrer. First, 20 wt.% of DB359 was sprinkled in the solution, followed by 5 wt.% of Indulin AT, after which the pH was increased to a value of 8.5-9 by adding triethanolamine. The obtained pre-dispersion was mixed for 30 minutes.

An ECM Multilab mill was filled for 42% with 0.4 mm yttrium stabilized zirconia beads ("high wear resistant zirconia grinding media" from TOSOH Co.). The mill was rinsed with DI after which the pre-dispersion was pumped into the mill. Milling was started in re-circulation mode at a rotation speed of 13 m/s, with a flow of 0.2 L/min. Samples were analysed every 20 minutes of residence time to determine the required milling time. After 30 min of residence time, the particle size showed to be low enough for ink jetting purposes (see Table 9). After 50 min of residence time, the dispersion reached a good quality as also the oversizer population had obtained a low level guaranteeing no jetting problems of the ink. The mill was emptied by pumping the obtained dispersion in a vessel. A milling time of 50 minutes is considered as acceptable in a production environment.

**Table 9**

| Residence time (min) | Particle size (nm) | Level of particle oversizers |
|---|---|---|
| 10 | 370 | High |
| 30 | 230 | Medium |
| 50 | 140 | Low |
| 70 | 125 | Low |

Dispersing DB359 in water is known to be very challenging. Long milling times, at least 50 min, are required to obtain a stable dispersion with small particle sizes and a low amount of particle oversizers. In order to have a reliable jetting of an ink, the amount of particle oversizers should be preferably 'low'.

The addition of lignin during the preparation of the disperse dye dispersion results in a significant reduction of the required milling time leading to an increase of production efficiency in the production of aqueous disperse dye inks. As such, the lignin improves the interaction between the dyes and the dispersing agent and works as a milling enhancing agent.

### Preparation of the blue disperse dye dispersion DISP-COMP-4

64.13 wt.% of DI, 10wt.% of Bykjet 9170, 0.02 wt.% of Proxel K were premixed in a vessel using a mechanical stirrer. Next, 25 wt.% of DB359 was sprinkeled in the solution, after which the pH was increased by adding 0.873% of triethanolamine. The obtained pre-dispersion was mixed for 30 minutes. A DynoMill-RL mill was filled for 42% with 0.4 mm yttrium stabilized zirconia beads ("high wear resistant zirconia grinding media" from TOSOH Co.). The pre-dispersion was pumped into the bead mill and the milling was started in re-circulation mode at a rotation speed of 11.8 m/s. After 30 min residence time, the mill was emptied by pumping the obtained dispersion in a vessel.

### Preparation of the blue disperse dye dispersion DISP-COMP-5

64.98 wt.% of DI, 10 wt.% of VANI, 0.02 wt.% of Proxel K were premixed in a vessel using a mechanical stirrer until all the Vani is in solution. Next, 25 wt.% of DB359 was sprinkeled in the solution. The obtained pre-dispersion was mixed for 30 minutes. A DynoMill-RL mill was filled for 42% with 0.4 mm yttrium stabilized zirconia beads ("high wear resistant zirconia grinding media" from TOSOH Co.). The pre-dispersion was pumped into the bead mill and the milling was started in re-circulation mode at a rotation speed of 11.8 m/s. After 30 min residence time, the mill was emptied by pumping the obtained dispersion in a vessel.

### C.4. Ink formulations

### C.4.1. Black inks

### Black inks were formulated according to Table 10, using black disperse dye dispersions prepared in § C.3.

INK-B1 is an ink without lignin or lignin sulfonate, but has a slightly lower dye load than the other inks. INK-B2 contains a lignin sulfonate (VANI) as well and an identical dye load as INK-B3. INK-B3 contains lignin instead of lignin sulfonate. INK-B4 has the same composition as INK-B3 but without the lignin.

**Table 10**

| | INK-B1 | INK-B2 | INK-B3 | INK-B4 |
|---|---|---|---|---|
| GLY | 20.0 | 17.5 | 17.5 | 17.5 |
| PD | 22.0 | 19.5 | 19.5 | 19.5 |
| SURF1 | - | 0.67 | - | - |
| VANI | - | 3 | - | - |
| DISP-COMP-2 | 15.63 | 18.75 | - | - |
| DISP-INV-1 | - | - | 30.00 | - |
| DISP-COMP-1 | - | - | - | 30.00 |
| DI water | Balance to 100% | Balance to 100% | Balance to 100% | Balance to 100% |

### C.4.2. Cyan inks

Cyan inks INK-C1 to INK-C5 were formulated according to Table 11, using cyan disperse dye dispersions prepared in § C.3. INK-C1 contains lignin.

**Table 11.**

| | INK-C1 | INK-C2 | INK-C3 | INK-C4 | INK-C5 |
|---|---|---|---|---|---|
| GLY | 16 | 16 | 16 | 16 | 16 |
| PD | 20 | 20 | 20 | 20 | 20 |
| SURF1 | - | - | - | - | 0.67 |
| SURF3 | - | 0.5 | 0.5 | 0.5 | - |
| DISP-INV-5 | 30 | - | - | - | - |
| DISP-COMP-4 | - | 24 | - | - | 24 |
| DISP-COMP-5 | - | - | 24 | 20 | - |
| DI water | Balance to 100% | Balance to 100% | Balance to 100% | Balance to 100% | Balance to 100% |

Cyan inks INK-C6 to INK-C9 were formulated according to Table 12, using cyan disperse dye dispersions prepared in § C.3. Inks INK-C8 and INK-C9 contained a sugar alcohol.

**Table 12**

| | INK-C6 | INK-C7 | INK-C8 | INK-C9 |
|---|---|---|---|---|
| GLY | 16 | 18 | 12 | 12 |
| PD | 20 | 22.5 | 15 | 15 |
| SURF1 | - | - | - | - |
| SURF3 | 0.25 | 0.25 | 0.25 | 0.25 |
| DISP-COMP-5 | 20 | 20 | 20 | 20 |
| XYL S | - | - | 19.67 | - |
| SORB S | - | - | - | 16.88 |
| DI water | Balance to 100% | Balance to 100% | Balance to 100% | Balance to 100% |

### C.5. Ink sets

Following ink sets were obtained by combining the inks prepared in § C.4 as listed in Table 13.

**Table 13: Comparative and inventive ink sets**

| INK SET | First ink | Second ink |
|---|---|---|
| SET-COMP1 | INK-B1 | INK-C4 |
| SET-COMP2 | INK-B2 | INK-C4 |
| SET-COMP3 | INK-B4 | INK-C4 |
| SET-COMP4 | INK-B2 | INK-C2 |
| SET-COMP5 | INK-B2 | INK-C3 |
| SET-COMP6 | INK-B2 | INK-C4 |
| SET-COMP7 | INK-B2 | INK-C5 |
| SET-COMP8 | INK-B2 | INK-C6 |
| SET-COMP9 | INK-B2 | INK-C7 |
| SET-COMP10 | INK-B3 | INK-C4 |
| SET-INV1 | INK-B3 | INK-C8 |
| SET-INV2 | INK-B3 | INK-C9 |

### C.6. Evaluation of ink sets

### C.6.1. Black disperse dye inks

From Table 14 it follows that both inks with lignin and lignin sulfonate (INK-B3 and INK-B2) significantly lower the L value of the ink coatings, but the lignin sulfonate clearly worsen the wet crock fastness, contrary to lignin. The same trend can be seen for feathering, where lignin (see INK-B3) brings most advantage with respect to the lignin sulfonate and the lignin free ink suffering most from feathering

Regarding jetting reliability, measured as open head time, the presence of lignin in the ink (INK-B3) clearly results in better latency compared to the reference without lignin (INK-B1) or the ink containing lignin sulfonate (INK-B2), despite the lower dye load of the first. A lower dye load in the ink usually improves the open head time.

**Table 14**

| | INK-B1 | INK-B2 | INK-B3 | INK-B4 |
|---|---|---|---|---|
| L value | - | B | A | C |
| Crock fastness | - | C | A | A |
| Feathering | C | B | A | C |
| Open head time | B | C | A | - |

### C.6.2. Cyan disperse dye inks

According to Table 15 it can be observed that the introduction of lignin sulfonate in the ink (See INK-C3) decreased the L value (CIE L*) of a coating with this ink. Lowering the dye and lignin sulfonate concentration (See INK-C4) increased the L value (CIE L*). A lower disperse dye concentration shows an improved jetting reliability and reduces the cost price of the ink and the ink set.

However, the viscosity of INK-C4 did not match the target viscosity in the inkjet print head. Increasing the amount of water-soluble organic solvents increased the viscosity of the ink within the target range of the inkjet print head, but decreased the storage stability of the ink (see INK-C6).

INK-C5 without lignin comprising SURF-1 showed a very poor open head time.

INK-C7 & INK-C8, comprising a sugar alcohol did reach target viscosity of the inkjet print head, showed an excellent storage stability and showed an excellent open head time.

**Table 15: Evaluation of the cyan inks of the ink sets from Table 14.**

| | INK-C2 | INK-C3 | INK-C4 | INK-C5 | INK-C6 | INK-C7 | INK-C8 |
|---|---|---|---|---|---|---|---|
| DB359 * | 6 | 6 | 5 | 6 | 5 | 5 | 5 |
| VANI * | 0 | 2.4 | 2 | 0 | 2 | 2 | 2 |
| L value | A | C | A | - | - | - | - |
| Ink viscosity | A | A | B | A | A | A | A |
| Storage Stability | - | A | A | A | B | A | A |
| Open Head time | - | - | - | C | - | A | A |

| | | | | | | | |
|---|---|---|---|---|---|---|---|
| *: in wt.% with respect to the total amount of ink. | | | | | | | |

It can be concluded that the inventive ink sets (SET-INV1 and SET-INV2) do solve the problem of reaching the target viscosity of the inkjet print head, showing an excellent storage stability and excellent open head time of the cyan ink together with an improved crock fastness and open head time of the black ink from the ink set of the invention.

## Claims

1. An aqueous ink set for textile printing comprising a first aqueous ink and a second aqueous ink, the first aqueous ink comprises a first disperse dye, a first dispersant and lignin, the second aqueous ink comprises a second disperse dye, a second dispersant and a sugar alcohol selected from the group consisting of threitol, erythritol, arabitol, ribitol, xylitol, lyxitol, sorbitol, mannitol, iditol, gulitol, talitol, galactitol, allitol, altritol, maltitol, isomaltitol, lactitol, turanitol, and combinations thereof.

2. The aqueous ink set according to Claim 1 wherein the first dispersant is a copolymer of an acrylate and an alkylene oxide.

3. The aqueous ink set according to any of the previous claims wherein the second dispersant is selected from the group consisting of an alkali salt of aromatic sulfonic acid, an alkali salt of aromatic sulfonic acid-formalin condensate, an alkali salt of β-naphthalenesulfonic acid, and an alkali salt of β -naphthalenesulfonic acid-formalin condensate copolymer.

4. The aqueous ink set according to any of the previous claims wherein the amount of lignin is from 0.1 to 5 wt.% with respect to the total weight of the ink.

5. The aqueous ink set according to any of the previous claims, the first ink and/or second ink further containing a water-soluble organic solvent.

6. The aqueous ink set according to any of the previous claims wherein the second ink comprises an acetylene glycol (alcohol)-based surfactant.

7. The aqueous inkjet ink set according to any of the previous claims wherein the first aqueous inkjet ink is a black ink or a cyan ink.

8. The aqueous ink set according to any of the previous claims wherein the first disperse dye is a mixture of DY54 and DB360.

9. The aqueous inkjet ink set according to Claim 7 wherein the second aqueous inkjet ink is a cyan ink, a magenta ink, a yellow ink, a red ink, an orange ink, a brown ink, a light cyan ink or a light magenta ink.

10. An inkjet recording method comprising the following steps:
a) jetting of an aqueous inkjet ink according to Claim 1 to Claim 9 onto a fabric comprising hydrophobic fibres so as to obtain an image comprising disperse dyes; and
b) applying heat to the fabric so as to fix the disperse dye onto the hydrophobic fibres.

11. An inkjet recording method comprising the following steps:
a) jetting of an aqueous inkjet ink according to Claim 1 to Claim 9 onto a transfer medium so as to obtain an image comprising disperse dye; and
b) bringing the transfer medium into contact with a fabric comprising hydrophobic fibres or an object coated with synthetic polymers; and
c) applying heat to the transfer medium and/or the fabric so as to fix the disperse dye onto the hydrophobic fibres of the fabric.

12. A method of preparing an aqueous inkjet ink set according to any of the claims 1 to Claim 9, comprising the following steps:
a) Preparation of a disperse dye dispersion by applying high shear forces or milling onto a mixture comprising water, a disperse dye, a dispersant and lignin.
b) Adding water, a water-soluble organic solvent and a surfactant to the
disperse dye dispersion of step a) to form the first ink of the ink set.

13. A polymer containing fabric comprising a first disperse dye, a first dispersant, lignin, a second disperse dye, a second dispersant and a sugar alcohol selected from the group consisting of sorbitol, xilitol, mannitol, arabitol, ribitol, dulcitol, and combinations thereof.
